(19) Europäisches Patentamt
European Patent Office
Office européen des brevets

(11) Veröffentlichungsnummer: **0 281 985 A2**

# (12) EUROPÄISCHE PATENTANMELDUNG

(21) Anmeldenummer: **88103478.9**

(51) Int. Cl.⁴: **C10L 7/02**

(22) Anmeldetag: **05.03.88**

(30) Priorität: **10.03.87 DE 3707649**

(43) Veröffentlichungstag der Anmeldung: **14.09.88 Patentblatt 88/37**

(84) Benannte Vertragsstaaten: **AT BE CH DE ES FR GB GR IT LI LU NL SE**

(71) Anmelder: **Basinski, Grzegorz, Dipl.-Ing.**
**Donatusstrasse 28**
**D-5000 Köln 71(DE)**

(72) Erfinder: **Basinski, Grzegorz, Dipl.-Ing.**
**Donatusstrasse 28**
**D-5000 Köln 71(DE)**

(74) Vertreter: **Klöpsch, Gerald, Dr.-Ing.**
**An Gross St. Martin 6**
**D-5000 Köln 1(DE)**

## (54) Verfahren zur Verfestigung von flüssigen Kohlenwasserstoffen.

(57) Die Erfindung betrifft ein Verfahren zur Verfestigung von flüssigen Kohlenwasserstoffen aller Art durch Zumischung zweier Komponenten, die miteinander reagieren. Die eine Komponente ist ein Polymethylhydrogensiloxan, die zweite Komponente wirkt als Katalysator und reagiert mit dem Siloxan unter Verfestigung. Als Katalysatoren sind Metalle in feinverteilter Form oder in Form ihrer Salze geeignet.

EP 0 281 985 A2

# Verfahren zur Verfestigung von flüssigen Kohlenwasserstoffen

Die Erfindung betrifft ein Verfahren zur Verfestigung von flüssigen Kohlenwasserstoffen oder solche enthaltenden Gemischen.

Die Überführung von flüssigen Kohlenwasserstoffen oder kohlenwasserstoffhaltigen Gemischen in den festen Aggregatzustand ist auf einer Vielzahl von verschiedenen Gebieten erwünscht:

So zum Beispiel zur Verhinderung von durch Treibstoff verursachten Gefahren, insbesondere Explosionen bei Flugzeugabstürzen. Als Folge des Absturzes oder Unfalls tritt häufig der noch in großen Mengen vorhandene Treibstoff aus und entzündet sich beziehungsweise explodiert.

Ein weiteres Anwendungsgebiet für die Verfestigung von flüssigen Kohlenwasserstoffen ist die Beseitigung von Ölrückständen auf dem Wasser ("Ölpest"), hervorgerufen durch auslaufendes Öl aufgrund von Schiffsunfällen wie Tankerunglücken oder auch Unfällen bei der Ölgewinnung im Meer.

Aus der Europäischen Patentschrift 0014228 ist es bereits bekannt, einen flüssigen Treibstoff durch Zusatz von Cyclodextrin oder einem cyclodextrinhaltigen Abbauprodukt von Stärke in den festen Zustand zu überführen. Hierbei bilden sich Einschlußverbindungen des flüssigen Treibstoffs in dem Stärkeprodukt. Dieses Produkt aus flüssigem Treibstoff und Cyclodextrin wird dann mit einer brennbaren Substanz und einem Matrixmaterial, z.B. Holzfaser vermischt und in der Wärme verformt. Dieses Verfahren ist zeit-und materialaufwendig. So muß zur Verfestigung von 300 g zu Beleuchtungszwecken verwendeten Kerosin mit 700 g cyclodextrinhaltigem Malzsirup vermischt und die Mischung 3 Stunden gerührt werden, worauf anschließend 300 g Faserpulpe und 300 g gepulvertes Paraffinwachs zugesetzt werden, worauf nochmals 3 Stunden gerührt und anschließend in der Wärme bei 100°C verformt wird.

Es leuchtet ein, daß ein solches Verfahren für die eingangs geschilderten Anwendungszwecke, wo es auf eine rasche Verfestigung der flüssigen Kohlenwasserstoffe ankommt, nicht geeignet ist.

Aufgabe der Erfindung ist daher die Bereitstellung eines Verfahrens, mit dem flüssige Kohlenwasserstoffe einfach und vorallem rasch in den festen Zustand überführt werden so, daß zum Beispiel im Fall eines Flugzeugunglücks oder einer Ölpest die Gefahr von sich entzündendem und explodierendem Treibstoff weitgehend ausgeschlossen wird.

Diese Aufgabe wird erfindungsgemäß dadurch gelöst, daß den flüssigen Kohlenwasserstoffen wenigstens ein Organopolysiloxan sowie ein Katalysator zugesetzt werden.

Organopolysiloxane sind organische Siliziumverbindungen, die bekannt sind (siehe z.B. Ullmann Enzyklopädie der technischen Chemie Bd. 15, 3.Auflage Seite 769 ff). Es handelt sich dabei um polymere Verbindungen, der Bruttozusammensetzung

$$R_nSiO_{\frac{4-n}{2}}$$

worin n jede Zahl zwischen 0 und 3 sein kann. Im Molekül ist daher mindestens eine SiO-Si-Bindung vorhanden. Für diese Verbindungen hat sich die Bezeichnung "Silikone" eingebürgert. Je nach der Art von R sind die Produkte zwischen ca. n = 1,8 und 3 Öle.

Besonders geeignet für die Zwecke der Erfindung sind die niedermolekularen Organopolysiloxane der Formel

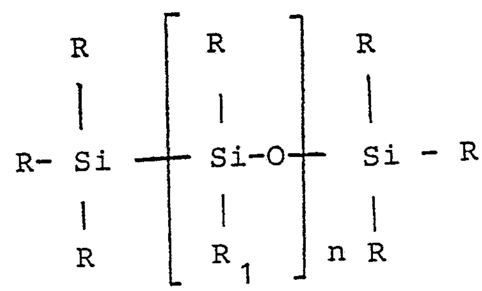

wobei n in Abhängigkeit vom Rest R so gewählt ist, daß das Polyorganosiloxan eine Flüssigkeit ist. Bevorzugt ist n = 1 bis 20. Flüssige Organopolysiloxane werden auch als Silikonöle bezeichnet. Die organischen Substituenten R sind gleich oder verschieden und bedeuten einen Alkylrest, bevorzugt den Methyl-oder Ethylrest oder einen Arylrest, bevorzugt den Phenylrest. Der Rest $R_1$ kann die gleiche Bedeutung wie R haben oder für Wasserstoff stehen. Typische geeignete Verbindungen sind die bekannten Methyl-, Ethyl-, Phenylmethyl- und Methylhydrogen-Silikonöle.

Ein geeignetes Beispiel für erfindungsgemäß bevorzugt verwendbare Polysiloxane sind die im Handel erhältlichen Polymethylhydrogensiloxane der allgemeinen Formel

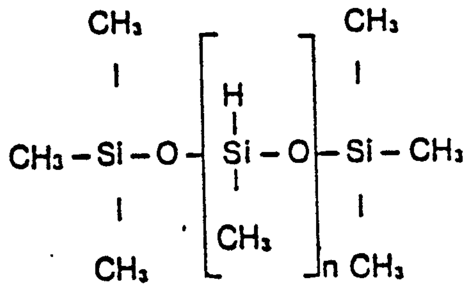

Weitere besonders geeignete Beispiele sind das Dimethylpolysiloxan ($R = R_1$ = Methyl) sowie das Polyhydrogenphenylsiloxan ($R_1 = H$; R = Phenyl).

Als zweite Komponente (Katalysator) die zur Verfestigung erforderlich ist, sind sowohl saure Katalysatoren wie Protonen-und Lewis-Säuren als auch basische Katalysatoren, als auch feinverteilte, insbesondere kolloidale Metalle, sowie organische Metallverbindungen verwendbar. Zu den sauren Katalysatoren gehören Mineralsäuren, wie Schwefelsäure, Chlorwasserstoffsäure, Schwermetallsalze wie Eisen-3-Chlorid, Bortrifluorid, Zinkchlorid, Zinntetrachlorid, ferner starke Karbonsäuren. Besonders geeignet sind auch komplexe Säuren, wie Hexachlorplatinwasserstoffsäure ($H_2PtCl_6$). Geeignete basische Katalysatoren sind die Alkalihydroxide, die Alkalialkoholate und Alkaliamide, ferner Amine, sowie quartäre Ammoniumverbindungen. Als organische Metallverbindungen werden die zur Härtung bzw. Vernetzung von Silikonen bekannten Verbindungen eingesetzt. Hierzu gehören in erster Linie die Verbindungen von Metallen wie Zink, Eisen, Blei, Kobalt, Zinn, Aluminium, Platin, Wolfram, Vanadin, Silber, Gold, Lithium, Kalium, Barium, Kalzium. Geeignet sind insbesondere die carbonsauren Salze, wie die Oktanoate. Beispiele für geeignete Verbindungen sind Zinkoktoat, Eisenoktoat, Zinnoktoat und Dibutylzinndilaurat.

Platin, Rhodium, Palladium, Wolfram, Vanadin, Silber, Gold, Zink, Blei, Aluminium, Kobalt, Nickel, Quecksilber, Lithium, Kalium, Barium, Kalzium sind auch in metallischer Form als Katalysator wirksam, wobei sie dann bevorzugt als feinverteiltes Metall, z.B. kolloidales Platin, eingesetzt werden.

Die Mengen der zur Verfestigung verwendeten beiden Komponenten - Polysiloxan und Katalysator - hängen unter anderem von der Art des flüssigen Kohlenwasserstoffs ab. Geeignete Mengen lassen sich durch einfache Handversuche ermitteln.

Die erste Komponente, das Organopolysiloxan kann, bezogen auf flüssigen Kohlenwasserstoff in Mengen von 0,1 bis 100 Gew.-% zugesetzt werden. Für praktische Zwecke haben sich Polysiloxanmengen von 3 bis 20, insbesondere 10 bis 15 Gew.-%, bezogen auf den flüssigen Kohlenwasserstoff bewährt.

Die benötigte Katalysatormenge beträgt einen Bruchteil des eingesetzten Siloxans und hängt von der Art des Katalysators ab. Sie beträgt mindestens 0,01, vorzugsweise mindestens 0,05 g/l Gemisch aus flüssigem Kohlenwasserstoff + Polysiloxan. Die Obergrenze ist nicht kritisch, sie wird bei Edelmetallkatalysatoren in erster Linie durch den Preis bedingt.

Innerhalb kurzer Zeit tritt die Verfestigung ein. Die Reaktionszeiten, d.h. die Zeiten bis zur Verfestigung, hängen von der Art des flüssigen Kohlenwasserstoffs ab und sind vergleichsweise kurz und liegen im Bereich von wenigen Sekunden bis zu etwa 1 Stunde. Danach ist kein explosionsfähiges Gemisch mehr vorhanden. Das entstandene Produkt ist leichter als Wasser. Die bei der Verfestigung ablaufende chemische Reaktion ist nicht exotherm, d.h. es wird keine Wärme frei.

Die Komponenten werden dem Treibstoff bevorzugt getrennt zugesetzt. Dabei kann die eine brennbare Komponente (das Polysiloxan) dem flüssigen Kohlenwasserstoff von vornherein zugemischt worden sein. Die zweite Komponente (Katalysator) wird bevorzugt in den flüssigen Kohlenwasserstoff eingedüst, d.h. unter Druck und in feinverteilter Form.

Die Erfindung ist besonders geeignet zur Verfestigung aller Arten von flüssigen Kohlenwasserstoffen. Hierunter sind zu verstehen Benzin, Benzol, Kerosin, Dieselkraftstoff, Heizöl, Rohöl, aber auch diverse Alkohole und Alkoholderivate.

Neben der Verfestigung von Autobenzin, Flugzeugbenzin, Dieselkraftstoff, Rohölen und anderen Produkten auf der Basis beispielsweise von Rohöl eignet sich das Verfahren auch zur Verfestigung von Altölen jeglicher Art, wie Motorenölen, sowie Transformatorenöle mit und ohne Gehalt an polychlorierten Biphenylen (PCB), so daß es möglich ist, gefahrlos diese Produkte zunächst zwischenzulagern oder auch in Großfeuerungsanlagen zu verbrennen.

Eine weitere wichtige Anwendung ist die Verfestigung von flüssigen Kohlenwasserstoffen, wie Treibstoffen oder ähnlichen Flüssigkeiten, wenn diese bei Störungsfällen aus undichten oder beschädigten Behältern oder Tanks austreten.

Die Erfindung wird nachfolgend anhand der Beispiele erläutert:

Beispiel 1

100 ml Flugbenzin (Kerosin) wurden in einem Erlenmeyer-Kolben mit 20 ml handelsüblichen Polymethylhydrogensiloxan (Siedepunkt größer 149°C; geruchlose Flüssigkeit) vermischt, worauf 0,5 g colloidales Platinmetall in 3 ml Silikonöl als Träger zugegeben wurde. Innerhalb von 10 bis 12 Sekunden trat Verfestigung in den nicht mehr

fließfähigen Zustand ein.

Gleiche Ergebnisse wurden erhalten, wenn man statt metallischem Platins Hexachlorplatinsäure verwendete. Auch in diesem Fall entstand ein gummiartiges durchsichtiges Gel.

Beispiel 2

70 g Kerosin wurden wie in Beispiel 1 mit 30 g Polymethylhydrogensiloxan und 0,06 g feinverteiltem metallischem Platin versetzt. Innerhalb von 12 Sekunden trat Verfestigung ein.

Beispiel 3

70 g Kerosin wurden mit 30 g Polydimethylsiloxan und 0,01 g kolloidalem Rhodium versetzt. Verfestigung trat innerhalb von ca. 300 Sekunden ein.

Beispiel 4

85 g Benzin wurden mit 15 g Polymethylhydrogensiloxan und 0,06 g Rhodiummetall versetzt. Verfestigung trat innerhalb von ca. 12-20 Sekunden ein.

Beispiel 5

65 g Dieselkraftstoff wurden mit 35 g Phenylsiloxan und 0,2 g Platinionen als Hexachlorplatinsäure versetzt. Innerhalb von 3 min erstarrte der flüssige Dieselkraftstoff zu einem Gel.

**Ansprüche**

1. Verfahren zur Verfestigung von flüssigen Kohlenwasserstoffen oder flüssige Kohlenwasserstoff enthaltenden Gemischen wie Treibstoffe, Roh- oder Schmieröle, dadurch gekennzeichnet, daß man den flüssigen Kohlenwasserstoffen wenigstens ein Organopolysiloxan, sowie einen Katalysator, der die Verfestigung auslöst, zusetzt.

2. Verfahren nach Anspruch 1, dadurch gekennzeichnet, daß man das Polysiloxan dem flüssigen Kohlenwasserstoff vorab zumischt.

3. Verfahren nach einem der Ansprüche 1 bis 2, dadurch gekennzeichnet, daß man als Katalysator Platin, Rhodium, Palladium, Wolfram, Vanadium, Silber, Gold, Zink, Blei, Aluminium, Kobalt, Nickel, Quecksilber, Lithium, Kalium, Barium, Kalzium als feinverteiltes Metall oder in Form ihrer Ionen, sowie OH-Ionen und Wasserstoff/Wasserstoffionen verwendet.

4. Verfahren nach Anspruch 3, dadurch gekennzeichnet, daß man die Metalle in Form ihrer Oktanoate verwendet.

5. Verfahren nach einem der Ansprüche 1 bis 4, dadurch gekennzeichnet, daß man das Polysiloxan in Mengen von 0,1 bis 100 Gew.-%, bevorzugt von 3 bis 20, insbesondere 10 bis 15 Gew.-%, bezogen auf den flüssigen Kohlenwasserstoff zumischt.

6. Verfahren nach einem der Ansprüche 1 bis 5, dadurch gekennzeichnet, daß man den Katalysator in Mengen von mindestens 0.01 g/l, vorzugsweise mindestens 0,05 g/l Gemisch auf flüssigen Kohlenwasserstoff und Polysiloxan, bezogen auf das Polysiloxan zusetzt.

7. Verfahren nach einem der Ansprüche 1 bis 6, dadurch gekennzeichnet, daß man die Katalysatorkomponente in den flüssigen Kohlenwasserstoff eindüst.